# EUROPEAN PATENT APPLICATION

(11) **EP 1 109 367 A2**
(43) Date of publication of application: **20.06.2001**
(21) Application number: 00121601.9
(22) Date of filing: 02.10.2000
(51) Int. Cl.: H04L 12/58, G06F 17/60

(54) **An electronic mail synchronizing device**

(30) Priority: 13.12.1999 JP 35367499
(71) Applicant: Sharp Kabushiki Kaisha, Osaka (JP)
(72) Inventor: Kaneko, Koichi, Nabari-shi, Mie (JP)
(74) Representative: MÜLLER & HOFFMANN Patentanwälte

(57) **Abstract**

An electronic mail synchronizing device capable of eliminating the necessity for providing a mail server with any special facility as well as a waste time for a user to read the same mails at a plurality terminals that the user possesses. An information processing unit (personal computer) (1) and an information processing unit (portable terminal) (2) include respectively a control portion and a storage portion for storing transmitted and received electronic mails and an electronic mail address of a party to whom the data must be transmitted. The information processing units are electrically connected with each other by placing the information units on their cradles and synchronization of data between the units is achieved by running a synchronizing software. The information processing unit (1) stores a mail address of the information processing unit (2) and, upon receipt of a request for synchronizing a holding electronic mail for the information processing unit (2), it changes the electronic mail address of the information processing unit (1) of the electronic mail address to be synchronized to the mail address of the information processing unit (2) and transmits the electronic mail data including the mail address to the information processing unit (2). If the electronic mail has an attached file, the information processing unit (1) transmits at least the file name to the information processing unit (2).

## Description

### BACKGROUND OF THE INVENTION

The present invention relates to a technique for synchronizing information stored at plural information processing terminals and specifically relates to an electronic mail synchronizing device.

An synchronizing technique for an electronic mail system is disclosed in Japanese Laid-open Patent Publication No. 9-8842, which synchronizes an electronic mail system in such a way that contents of electronic mails transmitted by plural terminals are stored in a server and, when the content of an electronic mail is corrected at a terminal and the corrected content with an identifier of the original electronic mail is send from the terminal to the server, the server identifies the electronic mail to be corrected and sends the corrected mail to the terminal which send the identified electronic mail.

The above-described conventional method, however, requires the server to store all electronic mails transmitted/received through the server and to be provided with a facility of transmitting the corrected mail.

Furthermore, when a user possesses several terminals and received electronic mails of the same content at the terminals, he or she may waste time to repeatedly read the same information stored at the terminals.

### SUMMARY OF THE INVENTION

It is a primary object of the present invention to provide an electronic mail synchronizing device for synchronizing electronic mails between information processing terminals, which can eliminate the need of providing a mail server with a specific facility and the need of doing unnecessary repeated confirmation of the same mail at all terminals of the same user.

Another object of the present invention is to provide an electronic mail synchronizing device for synchronizing an electronic mail between a first terminal capable of transmitting and receiving an electronic mail and a second terminal capable of at least receiving an electronic mail, characterized in that the first terminal storing a mail address of the second terminal, which receives an instruction for synchronizing an electronic mail holding at the first terminal in connection with the second terminal, changes the electronic mail address of the first terminal of the electronic mail to be synchronized at the first terminal to the electronic mail address of the second terminal and transmits the electronic mail data including the mail address to the second terminal.

Another object of the present invention is to provide an electronic mail synchronizing device, characterized in that, when the electronic mail to be synchronized has an information file attached thereto, the first terminal transmits at least a title of the attached information file to the second terminal.

### BRIEF DESCRIPTION OF THE DRAWINGS

Figure 1 is a schematic block diagram of an electronic mail synchronizing device according to the present invention.

Figure 2 shows an exemplified electronic mail data prepared in an information processing unit (personal computer) 1.

Figure 3 shows an exemplary presetting screen image when a synchronizing software is activated on an information processing unit according to the present invention.

Figure 4 is a flowchart depicting an algorithm for transmitting data from an information processing unit (personal computer) 1 to an information processing unit portable terminal) 2.

Figure 5 is a flowchart depicting an algorithm for transmitting data from an information processing unit (portable terminal) 2 to an information processing unit (personal computer) 1.

Figure 6 is an exemplary electronic mail data obtained by synchronization processing at an information processing unit (portable terminal) 2.

### PREFERRED EMBODIMENT OF THE INVENTION

Preferred embodiments of the present invention will be described below:

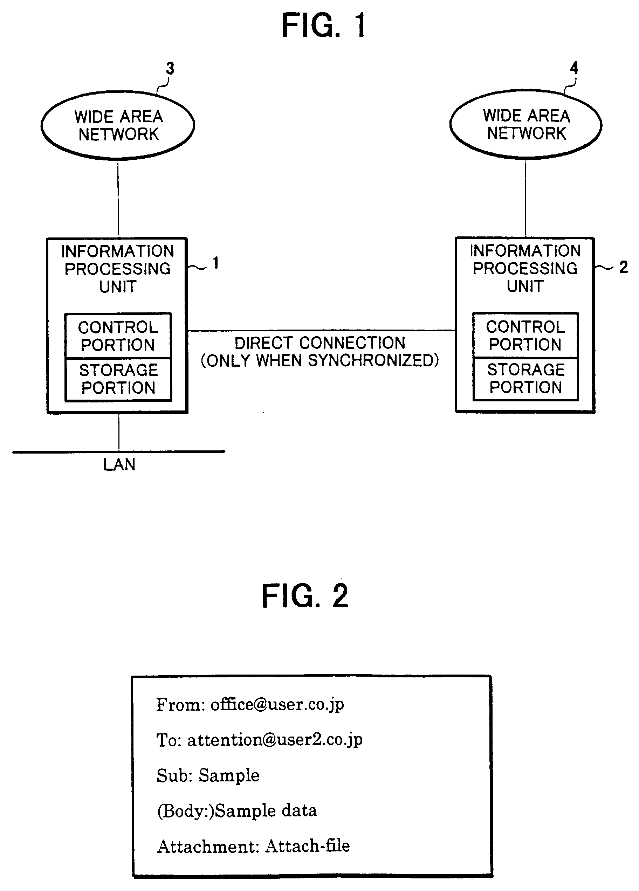

Figure 1 is a block diagram showing a structure of an electronic mail synchronizing device according to an embodiment of the present invention.

In Fig. 1, there is shown an information processing unit 1 that is for example a personal computer and an information processing unit 2 that is for example a portable terminal. The information processing unit 1 (personal computer) and the information processing unit 2 (portable terminal) are connected to a wide area network 3 and a wide area network 4 respectively. They can exchange messages with each other using the electronic mail service.

Each of the information processing units (personal computer) 1 and (portable terminal) 2 includes a control portion for controlling the operation and a storage portion for storing received and transmitted electronic mails and an electronic mail address of a party to whom the data must be transmitted (the personal computer 1 or the portable terminal 2).

The information processing units 1 and 2 are electrically connected with each other when they are placed on their cradles. The information processing units 1 and 2 can now achieve synchronization of data stored in their storage portion.

Figure 2 shows an exemplary electronic mail data prepared by the information processing unit (personal computer) 1.

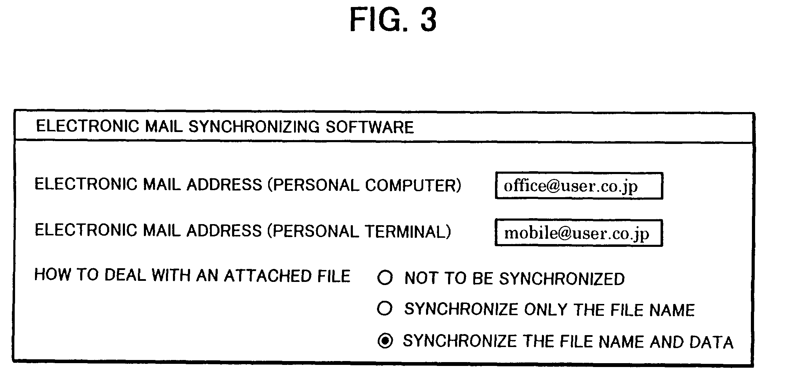

Figure 3 shows an exemplary presetting screen image when a synchronizing software is activated on an information processing unit.

When a synchronizing software is initiated on the information processing unit 1 (personal computer), a presetting screen image as shown in Fig. 3 appears on the display screen. When electronic mail addresses of terminals to be synchronized, a method for dealing with an attached file and other presetting items are input by the user, the preset data is stored in the storage portion for further conducting the synchronization processing.

The synchronization processing can be performed on the portable terminal usually in the same manner as data of a schedule or an address book is processed thereon.

Namely, data communication is conducted between the information processing unit (personal computer) 1 and the information processing unit (portable terminal) 2 until both units have the data matched with each other.

In this case, the data is transferred from the processing unit (personal computer) 1 to the information processing unit (portable terminal) 2 according to the following data transmission algorithm.

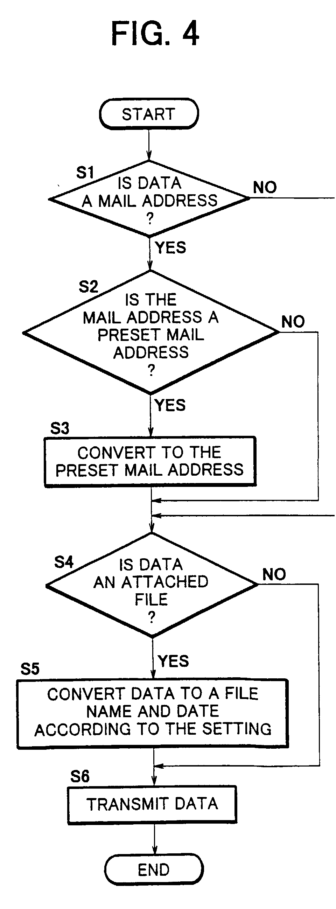

Figure 4 is a flowchart depicting an algorithm for transmitting data from the information processing unit (personal computer) 1 to the information processing unit (portable terminal) 2 according to the present invention.

This flowchart shows a procedure for transmitting electronic mail data on line-by-line (block-by-block) basis. In this instance, the synchronization is described by way of example with data of the electronic mail as shown in Fig. 2.

At Step S1, it is checked whether data to be transmitted is a mail address.

In this instance, the first line is the mail address as shown in Fig. 2 and hence the process advances to Step S2.

At Step S2, it is examined whether the mail address recognized at Step S1 matches with the preset mail address.

The preset mail address means an address preset for the information processing unit. If the same information processing unit has plural mail addresses, one of the addresses is selected for synchronization.

When the mail address was recognized as the address to be synchronized (Step S2), the address is converted to the preset address of the information processing terminal 2 (Step S3).

At Step S4, it is examined whether the transmittable data is an attached file. The attached file means, for example, a character string on line 5 of the electronic mail data shown in Fig. 2.

Since the transmittable data is, not an attached file, the mail address of the terminal, the process advances to Step S6.

At Step S6, the above processed data is transmitted to the information processing unit (portable terminal) 2.

On completion of the above described Steps S1 to S6, data on line 2 is read and the same processing is conducted for the read data.

Since the line 2 of the electronic mail data shown in Fig. 2 is a mail address, the process proceeds to Step S2 where it is examined whether the mail address is a preset mail address. Since the mail address is not the preset mail address in this case, the process proceeds to Step S4 for checking the data whether it is an attached file or not.

Since the data is not the attached file, the process proceeds to Step S6 whereat the data is transmitted as it is. The processing is conducted for data on all lines.

In processing data "attached file" on line 5 shown in Fig. 2, the data is discriminated not to be a mail address (Step S1) and hence the process jumps to Step S4. The data is discriminated to be an attached file (Step S4) and the process proceeds to Step S5 whereat the attached file name and date are converted to characters suitable to be transmitted. The converted data is then transmitted at Step S6.

The above procedure makes it possible to transfer the mail to a different terminal.

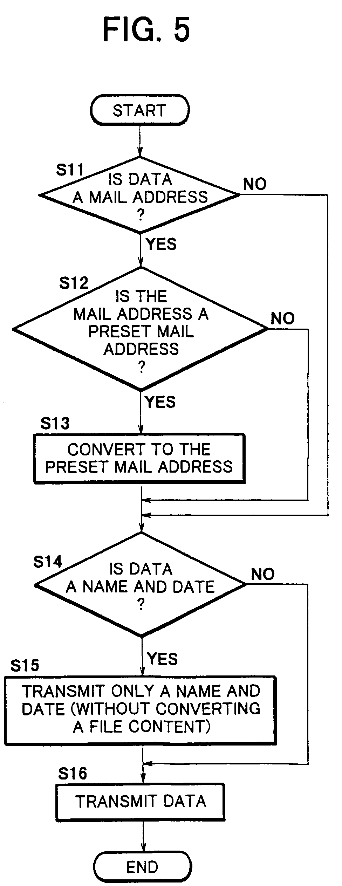

Figure 5 is a flowchart depicting an algorithm for transmitting data from an information processing unit (portable terminal) 2 to an information processing unit (personal computer) 1 according to the present invention.

The algorithm of Fig. 5 relates to the data transmission from the portable terminal 2 to the personal computer 1 while the algorithm of Fig. 4 relates to the data transmission from the personal computer 1 to the portable terminal 2.

The comparison between two flowcharts of Figs. 4 and 5 shows that the contents of Steps S14 and S15 of Fig. 5 differ from those of Steps S4 and S5 of Fig. 4.

This is because the personal computer has usually higher functions including its memory capacity than the portable terminal. In other words, transferring a large attached file from the personal computer may cause the portable terminal to be troubled with an overload to its memory or impossibility of execution of the received file due to the lack of the necessary function. Accordingly, only a name and a date of the attached file are transmitted from the personal computer to the portable terminal. On the contrary, the terminal can transmit an attached file without conversion together with its name and date to the personal computer.

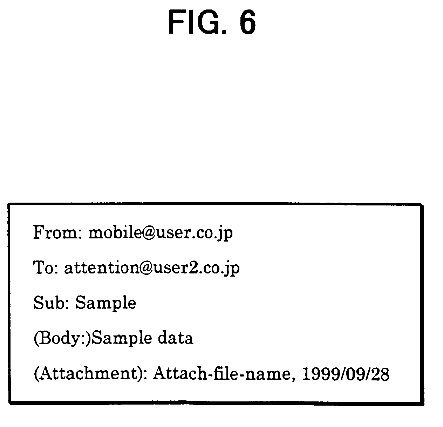

Figure 6 shows an exemplary electronic mail data obtained through the above processing on the information processing unit (portable terminal) 2.

As described above, the synchronizing device according to the present invention enables a portable terminal to carry and use the electronic mail facility of a personal computer without correcting the sender's address by synchronizing the transmittable data between the personal computer and the portable terminal.

According to the present invention, it is also achieved to save the memory capacity of the portable terminal by allowing the terminal not to use an attached file from the computer without deleting the attached file as unmatched data when synchronizing the data transmission from the computer to the terminal.

## Claims

1. An electronic mail synchronizing device for synchronizing an electronic mail between a first terminal (1) capable of transmitting and receiving an electronic mail and a second terminal (2) capable of at least receiving an electronic mail, characterized in that the first terminal (1) storing a mail address of the second terminal (2), which receives an instruction for synchronizing an electronic mail holding at the first terminal (1) in connection with the second terminal (2), changes the electronic mail address of the first terminal (1) of the electronic mail to be synchronized at the first terminal (1) to the electronic mail address of the second terminal (2) and transmits the electronic mail data including the mail address to the second terminal (2).

2. An electronic mail synchronizing device as defined in claim 1, characterized in that, when the electronic mail to be synchronized has an information file attached thereto, the first terminal transmits at least a title of the attached information file to the second terminal (2).
